# EUROPEAN PATENT APPLICATION

(11) **EP 2 554 040 A1**
(43) Date of publication of application: **06.02.2013**
(21) Application number: 12005666.8
(22) Date of filing: 03.08.2012
(51) Int. Cl.: A01D 34/416, A01D 34/90

(54) **Brush cutter**

(30) Priority: 04.08.2011 JP 2011171204
(71) Applicant: Makita Corporation, Anjo-shi, Aichi 446-8502 (JP)
(72) Inventor: Ohno, Shoko, Anjo-shi Aichi 446-8502 JAPAN (JP)
(74) Representative: Müller-Boré & Partner Patentanwälte

(57) **Abstract**

A brush cutter (10) comprises an operating rod (12) and a cord holder (50) configured to be rotatably driven at a front end (12a) of the operating rod (12). A cutting cord (60) is held by the cord holder (50) and configured that a tip of the cutting cord (60) is drawn out from the cord holder (50). The brush cutter (10) further comprises an upper cover (64), a trimming cutter (80) and a bouncing wall (66). The upper cover (64) is configured to cover from an upper side and lateral side a part of region in which the cutting cord (60) extending from the cord holder (50) revolves. The trimming cutter (80) is configured to cut the tip of the cutting cord (60) drawn out from the cord holder (50). The bouncing wall (66) is located inside the upper cover (64) and configured to bounce off a cut piece of the cutting cord (60) cut by the trimming cutter (80) toward an opposite side from a user.

## Description

The present teachings relates to a brush cutter for cutting off plants, and particularly to a cord type brush cutter that uses a string-like cutting cord as a cutting blade.

US 4,200,978 B discloses a cord type brush cutter. This brush cutter is provided with an operating rod, a cord holder that is rotatably driven at a front end of the operating rod, a cutting cord held by the cord holder, an upper cover configured to cover from an upper side and lateral side a part of region in which the cutting cord extending from the cord holder goes around from above and side, a cord feeding button provided on the cord holder and configured to feed the cutting cord by being pressed a trimming cutter configured to cut the tip of the cutting cord drawn out from the cord holder, and a bouncing wall configured to bounce off a cut piece of the cutting cord cut by the trimming cutter toward an opposite side from a user.

The conventional brush cutter bounces the tip of the cutting cord off by the bouncing wall to prevent the tip from flying toward a user. However, the bouncing wall is located outside the upper cover and therefore the cut piece of the cutting cord may be bounced off toward an unexpected orientation.

It is therefore an object of the present teachings to disclose a technique for preventing a cut piece of the cutting cord from flying toward a user.

To this end, the present teachings discloses a brush cutter in which a bouncing wall is located inside the upper cover. When the bouncing wall is located inside the upper cover, the cut piece of the cutting cord is bounced off not only the bouncing wall but also an inner surface of the upper cover. Accordingly, the cut piece of the cutting cord is reliably prevented from flying toward a user.

In one embodiment of the present teachings, a brush cutter comprises an operating rod and a cord holder configured to be rotatably driven at a front end of the operating rod. A cutting cord is held by the cord holder and configured that a tip of the cutting cord is drawn out from the cord holder. The brush cutter further comprises an upper cover, a trimming cutter and a bouncing wall. The upper cover is configured to cover from an upper side and lateral side a part of region in which the cutting cord extending from the cord holder revolves. The trimming cutter is configured to cut the tip of the cutting cord drawn out from the cord holder. The bouncing wall is located inside the upper cover and configured to bounce off the cut piece of the cutting cord cut by the trimming cutter toward an opposite side from a user.

FIG. 1 shows an entire brush cutter of an embodiment.

FIG. 2 shows a front end part of an operating rod viewed from obliquely above.

FIG. 3 shows the front end part of the operating rod viewed from obliquely below.

FIG. 4 is a cross-sectional diagram taken along line IV-IV of FIG. 1.

FIG. 5 shows the inside of a motor housing.

FIG. 6 shows a modification of an under cover with a cutoff.

FIG. 7 shows a modification of a cross-sectional shape of the under cover.

FIG. 8 shows a modification of the cross-sectional shape of the under cover.

FIG. 9 shows the entire spool.

FIG. 10 is a cross-sectional diagram showing a structure of a base end locking part of the spool.

In one embodiment of the present teachings, the bouncing wall may preferably be integrally formed on an inner face of the upper cover. In this configuration, the bouncing wall can be provided on the inner surface of the upper cover without a gap therebetween and thus the cut piece of the cutting cord is more reliably prevented from flying toward a user.

In one embodiment of the present teachings, the bouncing wall may preferably be perpendicular to a plane that is parallel with both a center axis of the operating rod and a rotational axis of the cord holder. In this configuration, the bouncing wall can surly prevent the cut piece of the cutting cord from flying toward a user.

In one embodiment of the present teachings, the brush cutter may comprise a cord feeding mechanism configured to feed the cutting cord from the cord holder. The cord feeding mechanism may preferably comprises a cord feeding button provided to the cord holder and configured to feed the cutting cord by being pressed. Accordingly, the use can easily feed the cutting cord by pressing the cord feeding button against the ground surface.

In one embodiment of the present teachings, the bouncing wall may be located apart from an edge of the upper cover in a direction of rotation of the cord holder.

In one embodiment of the present teachings, the upper cover is provided with a portion that extends from the bouncing wall in an opposite direction of rotation of the cord holder.

Representative, non-limiting examples of the present invention will now be described in further detail with reference to the attached drawings. This detailed description is merely intended to teach a person of skill in the art further details for practicing preferred aspects of the present teachings and is not intended to limit the scope of the invention. Furthermore, each of the additional features and teachings disclosed below may be utilized separately or in conjunction with other features and teachings to provide improved brush cutter.

Moreover, combinations of features and steps disclosed in the following detail description may not be necessary to practice the invention in the broadest sense, and are instead taught merely to particularly describe representative examples of the invention. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

Note that Directions such as "upper/upward," "lower/downward," "lateral," etc. described in the present specification are based on a posture of the brush cutter in case of being used by the user in a normal way. In detail, these directions indicate "upper/upward," "lower/downward," "lateral," orientations that are realized when the user grabs an operating rod or a handle fixed thereto and directs a cord holder and cutting cord toward a ground surface such that rotation axes thereof become vertical.

### EMBODIMENT

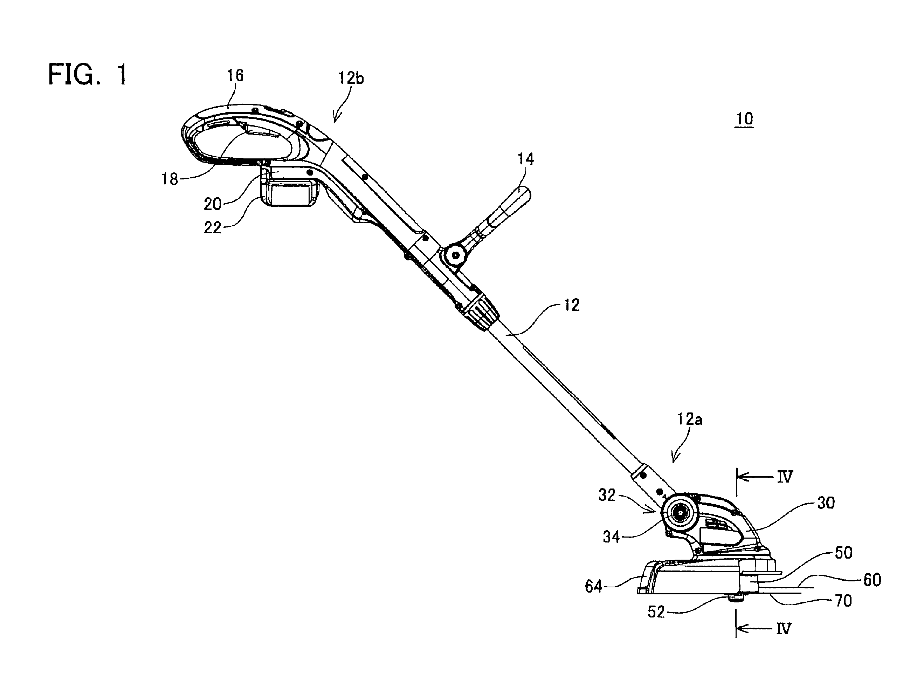

A brush cutter 10 of an embodiment is now described with reference to the drawings. The brush cutter 10 is a gardening power tool used for cutting off plants. As shown in FIG. 1, the brush cutter 10 has an operating rod 12. A rear end 12b of the operating rod 12 is provided with a handle 14 and a grip 16. Normally, a user grabs the handle 14 and the grip 16 to use the brush cutter 10. The grip 16 is provided with a trigger switch 18, which is a starting switch. A battery attachment 20 to/from which a battery pack 22 is attached/detached is provided under the grip 16. The brush cutter 10 of the present embodiment is of a cordless type having the rechargeable battery pack 22 as a power source.

As shown in FIGS. 1, 2 and 3, a front end 12a of the operating rod 12 is provided with a motor housing 30. The motor housing 30 is made of resin. The motor housing 30 is connected to the operating rod 12 by a joint mechanism 32 and capable of swinging with respect to the operating rod 12. The user can adjust the angle of the motor housing 30 in accordance with the height of the user or an inclination of a ground surface. The joint mechanism 32 is provided with a lock-off button 34. Pushing the lock-off button 34 enables the joint mechanism 32 to swing, and releasing the lock-off button 34 can fixate the joint mechanism 32.

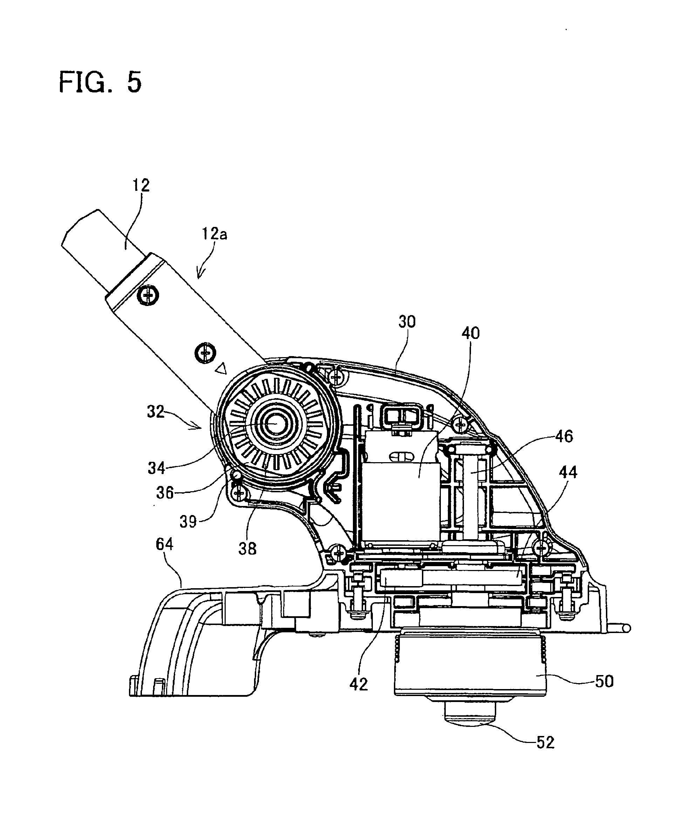

A cord holder 50 is provided under the motor housing 30. The cord holder 50 is supported so as to be able to rotate, and rotatably driven by a motor 40 provided inside the motor housing 30 (see FIG. 5). The cord holder 50 holds a string-like cutting cord 60. A tip of the cutting cord 60 is drawn out from the cord holder 50 and rotates along with the cord holder 50. The brush cutter 10 of the present embodiment uses the string-like cutting cord 60 as a cutting blade and causes the cutting cord 60 to revolve at high speeds to cut of plants. The cutting cord 60 of the present embodiment is, for example, a nylon cord.

The cord holder 50 is provided with a cord feeding button 52. The cord feeding button 52 protrudes downward. The cutting cord 60 can be fed from the cord holder 50 by pressing the cord feeding button 52. The cutting cord 60 is susceptible to damage and often snaps easily. However, the user may press the cord feeding button 52 against a ground surface without discontinuing the use of the brush cutter to replace the cutting cord 60. The cutting cord 60 is newly fed from the cord holder 50, allowing the user to continue using the brush cutter.

The front end 12a of the operating rod 12 is provided with an upper cover 64. The upper cover 64 is made mainly of resin. The upper cover 64 of the present embodiment is attached to the motor housing 30. However, the upper cover 64 may be configured to be attached directly to the operating rod 12. The upper cover 64 at least partly covers from an upper side and lateral side a region in which the cutting cord 60 revolves. Generally, the upper cover 64 has a fun-like shape as viewed in a planar view. The upper cover 64 has a first radially-extending edge 64a and a second radially-extending edge 64b, and extend from the first radially-extending edge to the second radially-extending edge in a direction of rotation of the cord holder 50 (i.e., a direction of rotation of the cutting cord 60). Thus, the upper cover 64 is configured to cover a part of the region (a part on the user side) in which the cutting cord 60 revolves. The upper cover 64 is located between the cutting cord 60 and the user to prevent objects such as plants or rocks from scattering against the user.

The front end 12a of the operating rod 12 is provided with an under cover 70. The under cover 70 has a disk-like cover main body 72 and two supports 74a, 74b provided on an outer edge 72a of the cover main body 70. The under cover 70, made of metal, is created by bending a metal plate. The two supports 74a, 74b of the under cover 70 are fixed to the upper cover 64. The cover main body 72 of the under cover 70 is located under the cutting cord 60 extending from the cord holder 50 and covers from an under side the region in which the cutting cord 60 revolves. The diameter of the cover main body 72 is smaller than the diameter of the region in which the cutting cord 60 extending from the cord holder 50 revolves. For this reason, the cover main body 72 covers only a root part of the cutting cord 60, i.e. a part on the most proximal side among the fed-out portion of the cutting cord 60, and the tip part of the cutting cord 60 is exposed when viewed from below. Note in the present embodiment that the under cover 70 is fixed to the upper cover 64; however, the under cover 70 may be attached to the cord holder 50 via, for example, a bearing.

The root part of the cutting cord 60 can hardly cut plants due to the slow revolving speed of the cutting cord 60. It is, therefore, preferred that a region in which the root part of the cutting cord 60 revolves be hidden by the under cover 70, so that the root part of the cutting cord 60 can be prevented from unnecessarily coming into contact with plants. As a result, the load imposed on the cutting cord 60 can be reduced, increasing the revolving speed of the cutting cord 60 and improving the cutting ability of the tip part of the cutting cord 60. In addition, energy loss can be reduced, cutting electric power consumption of the brush cutter 10 and increasing the time of running the brush cutter by the battery pack 22.

An opening 76 is formed in the cover main body 72. The opening 76 is formed in the center of the cover main body 72 and exposes the cord holder 50 and the cord feeding button 52 downward. The cord feeding button 52 passes through the opening 76 and protrudes below the cover main body 72. Therefore, the cord feeding button 52 can be pressed against the ground surface, even with the under cover 70 attached to the brush cutter 10. Therefore, the cutting cord 60 can be fed from the cord holder 50.

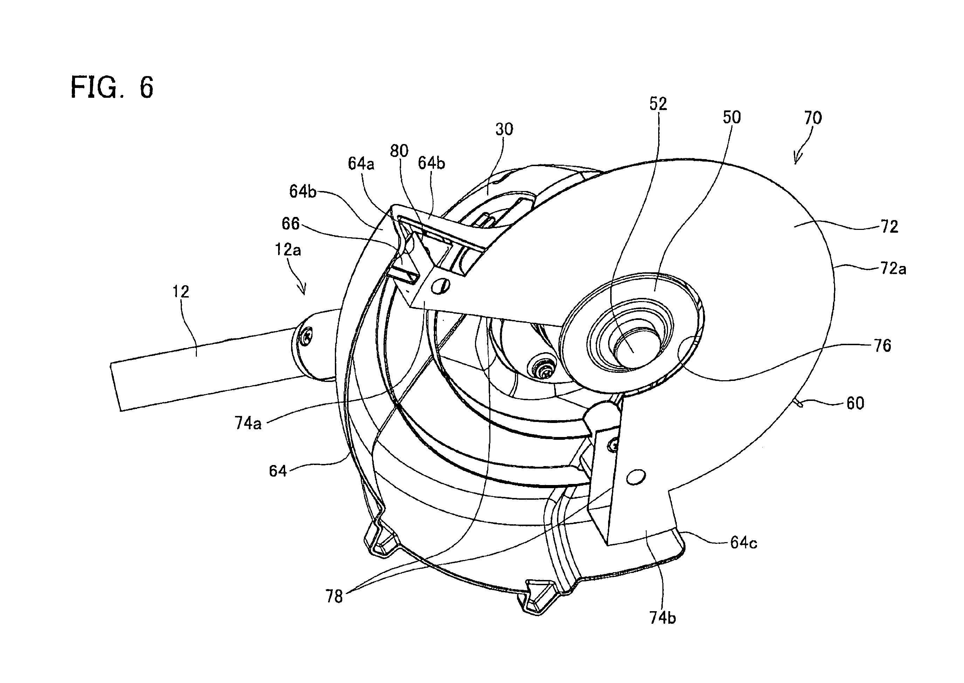

Here, as shown in FIG. 6, the cover main body 72 of the under cover 70 has a cutoff 78 in part of a circumferential direction of the cover main body 72 and may be in the shape of substantially a fan as viewed in a planar view. In this case, it is preferred that the cutoff 78 extend from the outer edge 72a of the cover main body 72 to the opening 76 formed in the center of the cover main body 72. This configuration can allow the user to easily attach the cutting cord 60 to the cord holder 50 without having the under cover 70 in the way. It is preferred that the cutoff 78 be located below the operating rod 12. Normally, plants located in a region under the operating rod 12 (i.e., a region on the user side with respect to the cord holder 50) are already cut off. Therefore, it is less likely that providing the cutoff 78 on the cover main body 72 in this region causes plants to come into contact with the root part of the cutting cord 60.

On the other hand, a movable cover may be provided to the cutoff 78 of the cover main body 72. According to this configuration, normally keeping the cover closed can prohibit plants from coming into contact with the root part of the cutting cord 60. Moreover, the user can open the cover so that the user can easily attach the cutting cord 60 to the cord holder 50 without having the under cover 70 in the way.

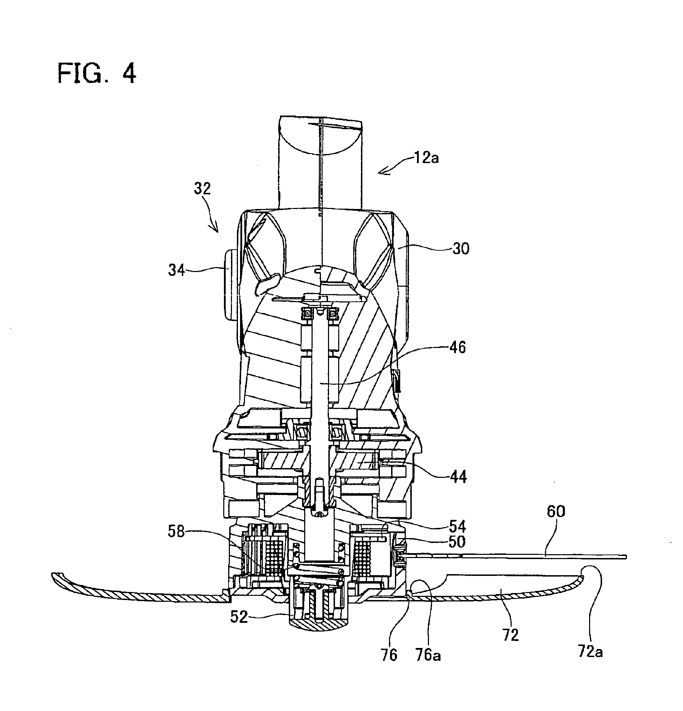

Next is described a cross-sectional shape of the under cover 70. As shown in FIG. 4, the cover main body 72 of the under cover 70 is not completely flat but is curved three-dimensionally. Especially the outer edge 72a of the cover main body 72 is curved upward. Because the outer edge 72a of the cover main body 72 is curved or folded upward in this manner, the outer edge 72a can be prevented from being stuck on plants and the ground surface. The user, therefore, can smoothly operate the brush cutter 10 along the ground surface. Note that the cover main body 72 of the present embodiment is curved gently upward from the opening 76 toward the outer edge 72a. Because the cover main body 72 is entirely curved into a downward convex, the user can operate the brush cutter 10 more smoothly along the ground.

Furthermore, an edge of the opening 76 of the cover main body 72 is provided with a protrusion 76a protruding upward (toward the cutting cord 60). This structure can prevent the cutting cord 60 from entering a gap between the opening 76 and the cord holder 50. Consequently, entanglement and cutting of the cutting cord 60 can be avoided. The protrusion 76a of the present embodiment surrounds the entire circumference of the opening 76; however, in another embodiment, the protrusion 76a may be formed intermittently along the edge of the opening 76.

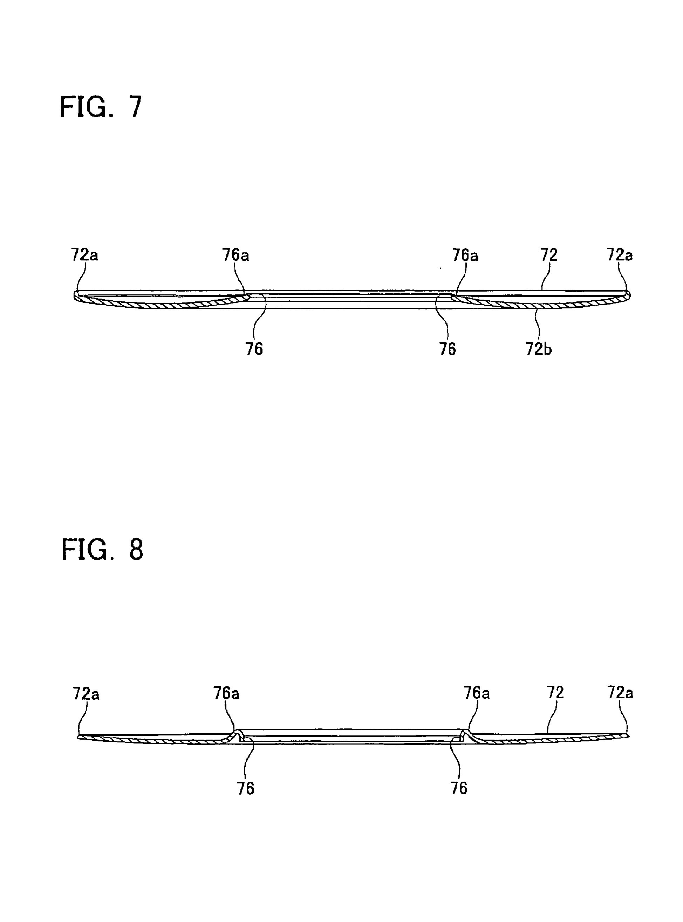

The cross-sectional shape of the under cover 70 can be changed in various ways. FIGS. 7 and 8 show examples of the cross-sectional shape of the under cover 70. In the under cover 70 shown in FIGS. 7 and 8 as well, the outer edge 72a of the cover main body 72 is curved upward in order to prevent the outer edge 72a from being stuck on plants and the ground surface. In addition, the edge of the opening 76 is provided with the protrusion 76a protruding upward, preventing entanglement and cutting of the cutting cord 60. Because the cover main body 72 is entirely curved into a downward convex, the user can smoothly operate the brush cutter 10. Note that an intermediate position 72b formed in a radial direction of the cover main body 72 of the under cover 70 shown in FIG. 7 protrudes farthest downward.

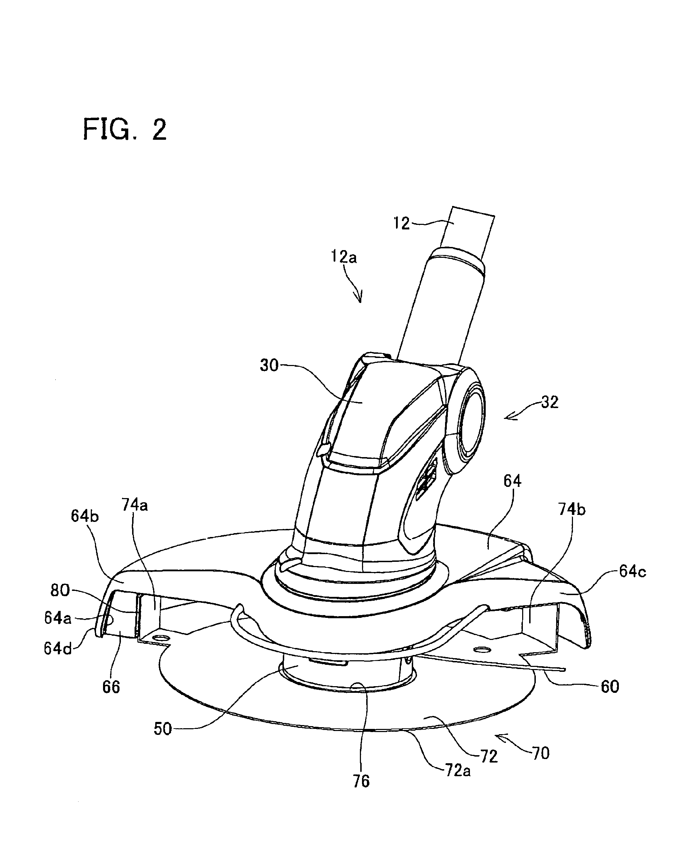

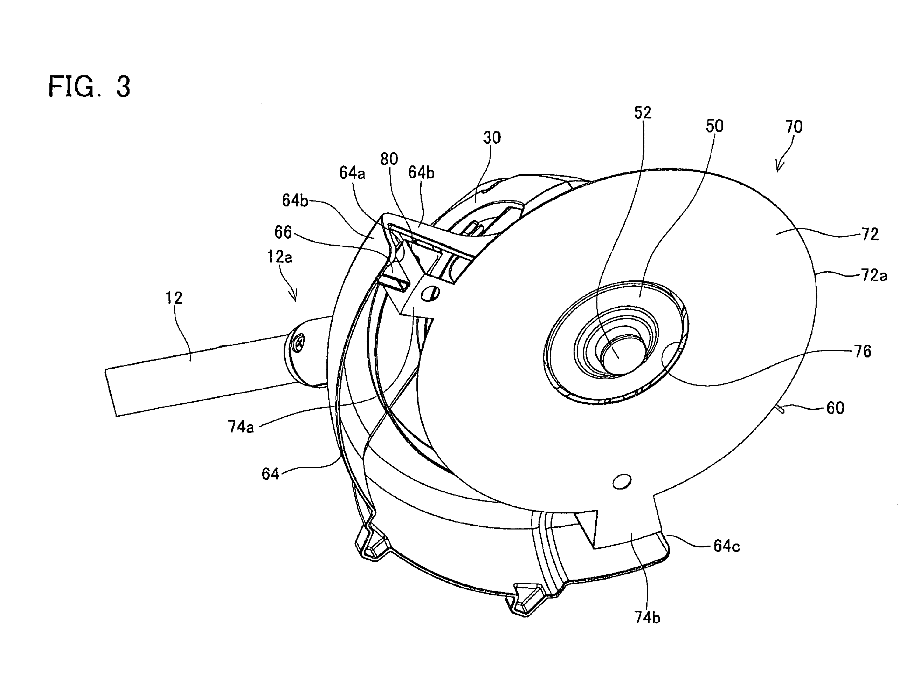

As shown in FIGS. 2 and 3, a trimming cutter 80 is integrally formed with the under cover 70. The trimming cutter 80 is located inside the upper cover 64. The trimming cutter 80 of the present invention is formed on, but not limited to, an edge of the support 74a of the under cover 70. The trimming cutter 80 cuts the tip of the cutting cord 60 that is fed excessively from the cord holder 50, and then trims the cutting cord 60 extending from the cord holder 50 to a proper length.

A bouncing wall 66 is formed in the vicinity of the trimming cutter 80. At least a part of the bouncing wall 66 is located on the radial outside (on the side opposite to the cord holder 50) with respect to the trimming cutter 80. The piece of the cutting cord 60 cut by the trimming cutter 80 collides with the bouncing wall 66 and is bounced off toward the opposite side of the user. In the brush cutter 10 of the present embodiment, the bouncing wall 66 is disposed on the inside of the upper cover 64. The bouncing wall 66 is located away from the first radially-extending edge 64b of the upper cover 64 in the direction of rotation of the cord holder 50 (i.e., the direction of rotation of the cutting cord 60). Consequently, a portion 64d of the upper cover 64 extends from the bouncing wall 66 in a direction opposite to the direction of rotation of the cord holder 50 (i.e. to the front direction of the bouncing wall 66). According to this configuration, the cut piece of the cutting cord 60 is bounced off not only by the bouncing wall 66 but also by an inner surface 64a of the portion 64d of the upper cover 64. This can prevent the cut piece of the cutting cord 60 from scattering against the user, more reliably. In addition, the bouncing wall 66 is prevented from being damaged by coming into contact with external objects.

The bouncing wall 66 of the present embodiment is integrally formed with the inner surface 64a of the upper cover 64. This configuration can eliminate a gap between the inner surface 64a of the upper cover 64 and the bouncing wall 66, preventing, more reliably, the cut piece of the cutting cord 60 from scattering against the user.

The position or orientation in which the bouncing wall 66 is formed can be designed appropriately. According to the experiment by the inventors, when the bouncing wall 66 is designed to be perpendicular to a planar surface parallel to a central axis of the operating rod 12 and a rotation axis of the cord holder 50, scattering of the cut piece of the cutting cord 60 against the user can be prevented most effectively.

An internal structure of the motor housing 30 is described next with reference to FIGS. 4 and 5. The motor housing 30 accommodates a motor 40 for driving the brush cutter 10. The motor 40 is connected electrically to the battery pack 22 (see FIG. 1) and operated by electric power supplied from the battery pack 22. The motor housing 30 further accommodates a pinion gear 42 fixed to the motor 40, a driven gear 44 engaged with the pinion gear 42, and a spindle 46 to which the driven gear 44 is fixed. The spindle 46 is supported rotatably with respect to the motor housing 30. The cord holder 50 is fixed to a lower end of the driven gear 44. With this configuration, the cord holder 50 is mechanically connected to the motor 40 and rotatably driven by the motor 40.

An internal structure of the joint mechanism 32 is described with reference to FIG. 5. The lock-off button 34 of the joint mechanism 32 has a flange part 36. The flange part 36 has a substantially hexagonal outer shape, and the lock-off button 34 is supported so as to be unable to rotate with respect to the operating rod 12. A plurality of ribs 38 that is arranged circumferentially are formed on the flange part 36 of the lock-off button 34. A plurality of ribs (not shown), too, is formed on an inner surface of the motor housing 30 so as to correspond to the ribs 38. Normally, the lock-off button 34 is biased toward the motor housing 30, and the ribs 38 of the lock-off button 34 are engaged with the ribs of the motor housing 30. Here, the motor housing 30 is prohibited from swinging with respect to the operating rod 12. However, pushing the lock-off button 34 can release the aforementioned engagement of the ribs 38, allowing the motor housing 30 to swing with respect to the operating rod 12. The lock-off button 34 is disposed on a rotation axis of the joint mechanism 32 so that the user can easily adjust the angle of the motor housing 30 while pushing the lock-off button 34.

The joint mechanism 32 is further provided with a rubber pin 39. The rubber pin 39 is a rubber member made of rubber. The rubber pin 39 is fixed to the motor housing 30 and in contact with the front end 12a of the operating rod 12 that swings relative thereto. When the user swings the motor housing 30 relative to the operating rod 12, the rubber pin 39 slides with respect to the front end 12a of the operating rod 12, generating an appropriate frictional force. This provides the user with an appropriate resistance, allowing the user to easily adjust the angle of the motor housing 30.

An internal structure of the cord holder 50 is described with reference to FIG. 4. The cord holder 50 accommodates a spool 54. The cutting cord 60 is wrapped around the spool 54. The aforementioned cord feeding button 52 is fixed to the spool 54. The cord feeding button 52 and the spool 54 are biased downward by a spring 58 and therefore normally unable to rotate with respect to the cord holder 50. When the cord feeding button 52 is pressed while the cord holder 50 is rotated, the spool 54 separates from the cord holder 50, thereby enabling the spool 54 to rotate with respect to the cord holder 50. At this moment, the cutting cord 60 wrapped around the spool 54 is fed by centrifugal force that acts on the cutting cord 60 extending from the cord holder 50.

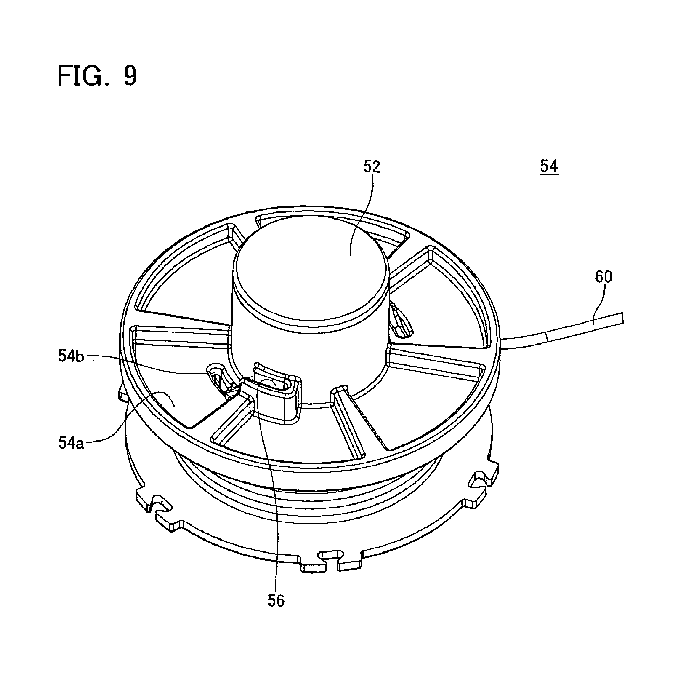

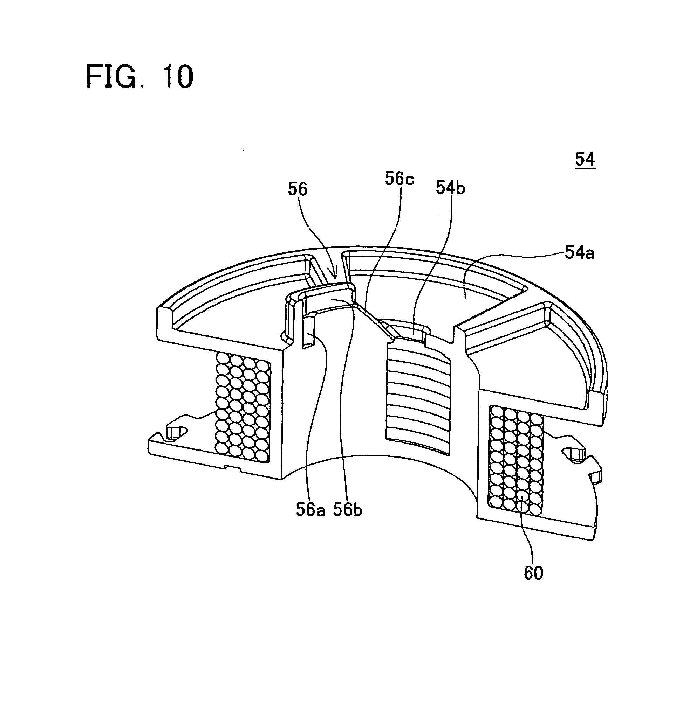

A structure of the spool 54 is described with reference to FIGS. 9 and 10. As described above, the cord feeding button 52 is fixed to the spool 54. A flange 54a of the spool 54 is provided with a base end locking part 56. The base end locking part 56 locks a base end of the cutting cord 60 when wrapping the cutting cord 60 around the spool 54. Because the base end locking part 56 is formed on an outer surface of the flange 54a, a cord passage hole 54b for allowing the passage of the cutting cord 60 therethrough is formed on the flange 54a of the spool 54.

FIG. 10 is a cross-sectional diagram of the spool 54 cut by a cylindrical surface passing through the base end locking part 56, showing the inside of the base end locking part 56. As shown in FIG. 10, the base end locking part 56 has a locking hole 56a, a retention groove 56b, and a guide inclined surface 56c. The locking hole 56a is a hole into which the base end of the cutting cord 60 is inserted. The locking hole 56a is opened in an axial direction of the spool 54 so as to allow the base end of the cutting cord 60 to be inserted therethrough easily. The cutting cord 60, with the base end thereof inserted into the locking hole 56a, is guided to the cord passage hole 54b on the flange 54a, by the retention groove 56b and the guide inclined surface 56c. Here, the guide inclined surface 56c continuing to the cord passage hole 54b is inclined along the circumferential direction. Accordingly, the cutting cord 60 can be guided smoothly without being folded by force. The user, therefore, can easily wrap the cutting cord 60 around the spool 54.

## Claims

1. A brush cutter (10) comprising:
an operating rod (12);
a cord holder (50) configured to be rotatably driven at a front end (12a) of the operating rod;
a cutting cord (60) held by the cord holder and configured that a tip of the cutting cord is drawn out from the cord holder;
an upper cover (64) configured to cover from an upper side and lateral side a part of region in which the cutting cord extending from the cord holder revolves;
a trimming cutter (80) configured to cut the tip of the cutting cord drawn out from the cord holder, and
a bouncing wall (66) configured to bounce off the tip end of the cutting cord cut by the trimming cutter toward an opposite side from a user, wherein the bouncing wall is located inside the upper cover.

2. The brush cutter as in claim 1, wherein the bouncing wall is integrally formed on an inner face (64a) of the upper cover.

3. The brush cutter as in claim 1 or 2, wherein the bouncing wall is perpendicular to a plane that is parallel with both a center axis of the operating rod and a rotational axis of the cord holder.

4. The brush cutter as in any one of claims 1 to 3, wherein the bouncing wall is located apart from a radially-extending edge (64b) of the upper cover in a direction of rotation of the cord holder.

5. The brush cutter as in any one of claims 1 to 4, wherein the upper cover is provided with a portion (64d) that extends from the bouncing wall in an opposite direction of rotation of the cord holder.

6. The brush cutter as in any one of claims 1 to 5, further comprises a cord feeding button (52) provided on the cord holder and configured to feed the cutting cord by being pressed.
